# EUROPÄISCHE PATENTSCHRIFT

(11) **EP 2 667 049 B1**
(45) Veröffentlichungstag und Bekanntmachung des Hinweises auf die Patenterteilung: **06.02.2019**
(21) Anmeldenummer: 13162165.8
(22) Anmeldetag: 03.04.2013
(51) Int. Cl.: F16F 1/13, F16F 1/12

(54) **Anordnung mit Schraubenfeder und Haltemitteln, Verwendung von Haltemitteln und Verfahren zur Montage von Schraubenfedern**
Assembly with helical spring and retention means, use of retention means and method for mounting helical springs
Agencement de ressorts cylindriques et moyens de fixation, utilisation des moyens de fixation et procédé de montage des ressorts cylindriques

(30) Priorität: 22.05.2012 DE 102012104408
(43) Veröffentlichungstag der Anmeldung: 27.11.2013
(73) Patentinhaber: Muhr und Bender KG, 57439 Attendorn (DE)
(72) Erfinder: Möller, Rudolf, 57439 Attendorn (DE); Roll, Achim, 57413 Finnentrop (DE)
(74) Vertreter: Oberwalleney, Stephan

(56) Entgegenhaltungen:
- EP-A1- 1 865 219
- EP-A1- 2 045 044
- US-A- 3 237 919
- US-A- 4 442 580
- US-B1- 6 237 901

## Beschreibung

Die Erfindung betrifft eine Anordnung mit einer Schraubenfeder. Schraubenfedern bestehen aus wendelförmig gewundenem Draht. Durch Zug- oder Drückkräfte in der Achse wird der Drahtquerschnitt im Wesentlichen mit Verdreh-Schubspannung beansprucht. Schraubenfedern sind eines der Maschinenelemente mit der weitesten Verbreitung und kommen daher in vielen technischen Gebieten zum Einsatz. Ihre Charakteristik kann durch Bereiche mit veränderlichem Drahtdurchmesser, variabler Steigung oder sich veränderndem Federdurchmesser (kegelstumpfförmige Schraubenfeder) gestaltet werden.

Im Kraftfahrzeugbau werden Schraubenfedern beispielsweise als Tragfedern im Fahrgestell oder als Ventilfedern eingesetzt. Schraubenfedern werden in der Regel aus rundem Draht mit angelegten und plangeschliffenen oder mit eingerollten Enden hergestellt. Eine Druckkrafteinleitung erfolgt meist über angepasste Federteller. Generell wird nach der äußeren Belastung der Schraubenfeder zwischen Zug- und Druckfeder unterschieden. Die Hauptbelastungsrichtung verläuft in Richtung der Federachse, wobei sich die Federenden geringfügig gegeneinander verdrehen können.

Aus der EP 2 045 044 B1 ist ein Verfahren zur Vormontage eines Federbeins vor seinem Einbau an einem Fahrzeug bekannt. Hierfür wird die Tragfeder auf eine vorbestimmte Länge eingefedert. Anschließend wird die Tragfeder durch starre Festlegungshaken auf die vorbestimmte Länge gehalten, die der Länge entspricht, wenn die Feder am Federbein angebracht ist, wenn das Federbein entspannt ist. Dann wird das Federbein montiert, wobei die Tragfeder durch die Festlegungshaken auf die vorbestimmte Länge eingefedert gehalten wird.

Aus der US 6 237 901 B1 sind Federungen in verschiedenen Ausführungen offenbart, die jeweils eine Schraubenfeder mit einer Halte- und Verbindungsarmierung aufweisen. Die Halte- und Verbindungsarmierung soll das Federverhalten der Schraubenfeder bei Betrieb beeinflussen. In einer Ausführungsform ist die Halte- und Verbindungsarmierung als Umspritzung der Feder gestaltet, in welche die Feder vollständig eingebettet ist. In einer anderen Ausführungsform umfasst die Halte- und Verbindungsarmierung ein längliches Element mit zwei Enden, die mittels Schrauben an einem Sicherungselement befestigt sind.

Aus der EP 1 165 331 B1 ist eine Anordnung mit einer Schraubenfeder und einem Stützlager für Federbeine bekannt. Federbeine für Kraftfahrzeuge umfassen einen Stoßdämpfer, der an seinem oberen Ende mit der Fahrzeugkarosserie und an seinem unteren Ende mit dem Radachsschenkel verbunden ist, sowie eine Schraubenfeder. Das untere Ende der Schraubenfeder ist über einen Schraubenfedersitz mit dem Stoßdämpfer verbunden. Die oberste Endwindung der Schraubenfeder wird von einem Stützlager aufgenommen.

Aus der DE 20 2011 100 697 U1 ist ein Federspanner mit einer Stützplatte und zwei Spindeltrieben bekannt. Die Spindeltriebe können beim Spannen am Federdämpferbein abgestützt werden. Über Zughaken sind die Spindeltriebe mit einer Federwindung der Schraubenfeder des Federdämpferbeins in Eingriff bringbar.

Der vorliegenden Erfindung liegt die Aufgabe zugrunde, eine Anordnung mit einer Schraubenfeder vorzuschlagen, welche eine vereinfachte Handhabung und Montage erlaubt. Die Aufgabe liegt ferner in der Verwendung von Haltemitteln, um eine Schraubenfeder in einem verkürzten, vorgespannten Zustand zu halten. Weiter besteht die Aufgabe darin, ein Verfahren vorzuschlagen, mit dem die Schraubenfeder einfacher handhabbar und montierbar ist.

Eine Lösung besteht in einer Anordnung aus einer Schraubenfeder und Haltemitteln, wobei die Schraubenfeder einen ersten Endabschnitt zur Anlage an einer ersten Federaufnahme, einen zweiten Endabschnitt zur Anlage an einer zweiten Federaufnahme und zwischen den beiden Endabschnitten mehrere Windungen aufweist, wobei die Haltemittel so an der Schraubenfeder angreifen, dass die Schraubenfeder gegenüber einer entspannten Ausgangslänge axial verkürzt ist, wobei die Haltemittel zumindest ein Band aufweisen und in mit der Schraubenfeder verbundenem Zustand eine unveränderbare Länge haben, und wobei das zumindest eine Band an zwei zwischen den beiden Endabschnitten liegenden und voneinander axial beabstandeten Windungen angreift und diese umschlingt, wobei das zumindest eine Band durch Zerstören von der Schraubenfeder lösbar ist.

Dadurch, dass die Haltemittel zumindest in angebrachtem Zustand eine unveränderbare Länge haben, ergibt sich eine einfache Montage, Handhabung und Demontage. Die Anordnung aus Schraubenfeder und Haltemitteln stellt eine vormontierte Baueinheit dar, welche in diesem axial verkürzten Zustand an Abnehmer geliefert werden kann. Auf diese Weise wird der benötigte Transportraum für die Schraubenfedern gering gehalten. Außerdem entfällt beim Abnehmer, beispielsweise in einer Werkstatt, der sonst nötige Verfahrensschritt des Vorspannens der Schraubenfeder, um diese auf Einbaulänge zu verkürzen. Mit unveränderbarer Länge der Haltemittel ist gemeint, dass sich die Haltemittel in montiertem Zustand nicht über ihre werkstoffbedingte elastische Dehnung hinaus verlängern bzw. verlängerbar sind. Bei Verwendung von Kunststoffband als Haltemittel kann, je nach Anzahl der Bänder, die elastische Dehnung bis zu 5% betragen, was gemäß dieser Definition auch noch mit der Formulierung der unveränderbaren Länge umfasst sein soll. Insbesondere ist auch vorgesehen, dass die Haltemittel nach dem Befestigen an der Schraubenfeder in ihrer Länge unverstellbar sind. Vor dem Anbringen können die Haltemittel verstellbar ausgeführt sein.

Die Schraubenfeder kann jede beliebige Form haben, beispielsweise eine zylindrische, konische oder eine über der Länge variable Form aufweisen. Ferner kann die Schraubenfeder durch Bereiche mit veränderlichem Drahtdurchmesser, variabler Steigung und/oder sich veränderndem Federdurchmesser (kegelstumpfförmige Schraubenfeder) gestaltet werden.

Ein bevorzugter Anwendungsfall ist die Ausgestaltung der Schraubenfeder als Achsfeder eines Kraftfahrzeugs. Die Schraubenfeder kann nach einer ersten Möglichkeit in einem Federbein eingebaut werden, das heißt in koaxialer Anordnung um einen Stoßdämpfer. Dies kann bei der Fahrzeugendmontage am Fahrzeug erfolgen, oder auch bei der Vormontage eines Federbeins, das einen Stoßdämpfer und eine Schraubenfeder als vormontierte Baueinheit umfasst. Nach einer zweiten Möglichkeit kann die Schraubenfeder direkt in der Achse des Fahrzeugs verbaut wird, und zwar neben bzw. in paralleler Anordnung zum Stoßdämpfer. Die letztgenannte Bauweise findet sich vor allem in Hinterachsen von Kraftfahrzeugen, kommt aber - je nach Bauraumverhältnissen - auch in Vorderachsen vor. Um die Schraubenfeder im Federbein bzw. in der Fahrzeugachse montieren zu können, muss die Schraubenfeder normalerweise mit einem Spezialwerkzeug vorgespannt werden. Dieser Montageschritt entfällt durch die erfindungsgemäße Anordnung aus Schraubenfeder mit Haltemitteln. Es versteht sich, dass neben der Verwendung der Schraubenfeder als Achsfeder auch beliebige andere Anwendungsfälle für erfindungsgemäße Anordnungen mit Schraubenfedern denkbar sind.

Die Schraubenfeder hat einen ersten Endabschnitt zur Anlage an einer ersten Federaufnahme, einen zweiten Endabschnitt zur Anlage an einer zweiten Federaufnahme sowie mehrere zwischen den beiden Endabschnitten liegende Windungen. Erfindungsgemäß ist vorgesehen, dass die Haltemittel an zwei der zwischen den Endabschnitten liegenden Windungen der Schraubenfeder angreifen. Durch diese Maßnahme sind die Endwindungen der Schraubenfeder frei und können ohne Beeinträchtigung durch die Haltemittel in ihre Einbaulage zwischen zwei Stützflächen bzw. Federaufnahmen positioniert werden. Nach einer bevorzugten Ausgestaltung sind mehrere Haltemittel, vorzugsweise zwei oder drei Haltemittel, über dem Umfang verteilt angeordnet. Hierdurch wird gewährleitstet, dass die Schraubenfeder zumindest weitestgehend gleichmäßig axial verkürzt wird.

Besonders günstig für einen einfachen Einbau ist es, wenn die Schraubenfeder durch die Haltemittel auf eine axiale Länge verkürzt ist, die zumindest 90 %, insbesondere zumindest 95% einer Einbaulänge der Schraubenfeder entspricht, in der die Feder zunächst noch unbelastet ist. Auf diese Weise ist der Längenunterschied zwischen der Schraubenfeder und dem Abstand der beiden Stützflächen voneinander im Einbauzustand verhältnismäßig gering, so dass auch der Federweg nach dem Entfernen der Haltemittel nur gering ist, bis die Schraubenfeder mit der jeweiligen Stützfläche in Anlage kommt. Im Hinblick auf den benötigten Platzbedarf ist es besonders günstig, wenn die Schraubenfeder mittels der Haltemittel gegenüber der entspannten Ausgangslage um zumindest 20%, insbesondere um zumindest 30 % verkürzt ist. Entsprechend reduziert sich auch der Platzbedarf für den Transport der Schraubenfeder vom Hersteller zum Abnehmer, so dass mindestens 20 % bzw. 30% mehr Schraubenfedern bei gleichem Transportraum transportiert werden können. Dies gilt auch für den Anwendungsfall, bei dem die erfindungsgemäße Schraubenfeder-Haltemittel-Anordnung als Teil einer vormontierten Baueinheit mit einem Stoßdämpfer verwendet wird. In axial verkürztem Zustand der Schraubenfeder ist auch die Baueinheit aus Stoßdämpfer und Schraubenfeder-Haltemittel-Anordnung axial verkürzt, so dass sich der Bedarf an Verpackungsmaterial und benötigtem Transportraum reduzieren.

Erfindungsgemäß umfassen die Haltemittel zumindest ein Band, das zwei zu einander axial beabstandete Windungen umschlingt. Ein solches endloses Band kann auch als Umreifungsband bezeichnet werden. Das zumindest eine Band ist in mit der Feder verbundenem Zustand durch Zerstören lösbar, beispielsweise durch Aufschneiden. Vorzugsweise sind die Endabschnitte der Schraubenfeder frei, das heißt, dass das Band jeweils ausgehend von den Endabschnitten an der zweiten oder dritten Windung angreift. Die freien Endabschnitte erstrecken sich vorzugsweise zumindest über eine volle Windung, können jedoch auch kürzer gestaltet sein, beispielsweise eine Dreiviertel Windung oder mehr, ausgehend vom freien Federende. Dadurch, dass die Endabschnitte frei sind, wird sichergestellt, dass das Band keine Beeinträchtigung bei der Montage der Schraubenfeder darstellt, insbesondere im Bereich der Auflager für die Federenden. Nach einer bevorzugten Ausgestaltung ist das Band aus Kunststoff hergestellt, vorzugsweise aus einem Kunststoff mit hoher Festigkeit, wie Polyester (PET) oder Polypropylen (PP). So wird eine hohe Haltekraft erzeugt, die eine dauerhafte Bandspannung über lange Zeiträume sicherstellt, auch wenn die Anordnung bei der Handhabung versehentlich fallengelassen wird. Das zu verwendende Band hat im Anwendungsfall zum Halten einer Achsfeder zumindest eine Bruchlast von 2000 N, vorzugsweise von mehr als 3000 N. Die Verwendung eines Bandes stellt ein kostengünstiges und einfach zu demontierendes Einweg-Haltemittel dar. Eine Demontage des Bandes erfolgt im Einbauzustand einfach durch Aufschneiden.

Nach einer nicht erfindungsgemäßen Möglichkeit können die Haltemittel zumindest ein Hakenelement umfassen. Das Hakenelement besteht vorzugsweise aus einem Werkstoff mit hoher Festigkeit, beispielsweise aus einem Stahlwerkstoff. Dabei ist vorgesehen, dass das Hakenelement an den Enden zwei umgebogene Halteabschnitte aufweist, welche zwei axial voneinander beabstandete Windungen der Schraubenfeder umgreifen können. Auch hier ist vorzugsweise vorgesehen, dass das Hakenelement nicht an den Endabschnitten, sondern den daran anschließenden Windungen angreift, um einen ungehinderten Einbau der Schraubenfeder gegenüber den Auflagern zu ermöglichen. Die Hakenelemente können starr ausgebildet sein, das heißt unverstellbar. Es ist jedoch auch denkbar, dass die Hakenelemente vor der Montage an die Schraubenfeder eine in Stufen verstellbare Länge haben. Diese Ausgestaltung hat den Vorteil, dass sich mit den Hakenelementen verschiedene Vorspannlängen der Schraubenfeder realisieren lassen.

Nach einer günstigen Ausgestaltung, welche für beide der obengenannten Möglichkeiten gilt, sind rutschhemmende Mittel zwischen den Haltemitteln und der Schraubenfeder vorgesehen. Die rutschhemmenden Mittel sind derart gestaltet, dass sie ein Abgleiten der Haltemittel entlang der Windungen der Schraubenfedern verhindern oder zumindest hemmen. Hierfür kann vorgesehen sein, dass die Haltemittel zumindest im Kontaktbereich mit der Schraubenfeder eine strukturierte Oberfläche aufweisen. Beispielsweise können die Haltemittel auf ihrer Oberfläche Romben, Riefen, Waben oder eine Kreuzstruktur aufweisen. Durch eine solche strukturierte Oberfläche werden die Reibungskräfte im Kontaktbereich zwischen den Haltemitteln und der Schraubenfeder erhöht und ein Verrutschen der Haltemittel entlang der Windungen verhindert bzw. gehemmt. Zusätzlich oder alternativ zu der strukturierten Oberfläche können die rutschhemmenden Mittel zumindest eines aus der Gruppe von Kleber, Gummielement, Silikon und Band mit hohem Reibungskoeffizienten umfassen. Die rutschhemmenden Mittel werden vor der Montage der Haltemittel auf die entsprechenden Abschnitte der Federwindungen aufgebracht.

Das Umreifungsband wird als Haltemittel verwendet, um eine Schraubenfeder in einer gegenüber der entspannten Ausgangslänge axial verkürzten Länge zu halten. Der Vorteil der Verwendung eines oder mehrerer Bänder besteht darin, dass hiermit ein leichtes und kostengünstiges Haltemittel zur Verfügung gestellt wird. Die Schraubenfedern können mit den Bändern auf ihre Einbaulänge vorgespannt werden. Ein Entfernen der Bänder erfolgt durch einfaches Aufschneiden der Bänder im Einbauzustand der Schraubenfeder.

Eine weitere Lösung liegt in einem Verfahren zur Montage einer Schraubenfeder, die einen ersten Endabschnitt zur Anlage an einer ersten Stützfläche, einen zweiten Endabschnitt zur Anlage an einer zweiten Stützfläche sowie mehrere Windungen zwischen den beiden Endabschnitten aufweist, mit den Verfahrensschritten: Verkürzen der Schraubenfeder auf eine gegenüber ihrer Ausganglänge verkürzten Länge; Anbringen von Haltemitteln an der Schraubenfeder derart, dass die Schraubenfeder in ihrer axial verkürzten Länge gehalten wird, wobei die Haltemittel in mit der Schraubenfeder verbundenem Zustand eine unveränderbare Länge aufweisen, wobei die Haltemittel zumindest ein Band aufweisen und das Anbringen an der Schraubenfeder durch Umschlingen zweier axial beabstandeter Windungen, die zwischen dem ersten Endabschnitt und dem zweiten Endabschnitt liegen, und Verbinden der freien Enden des Bandes miteinander erfolgt; Positionieren der Anordnung aus Schraubenfeder mit Haltemitteln in einer Einbaulage zwischen der ersten Stützfläche und der zweiten Stützfläche; und Lösen der Haltemittel zur Zerstören des zumindest einen Bandes, wobei die erste und zweite Stützfläche nach dem Lösen der Haltemittel über die Schraubenfeder gegeneinander abgestützt sind.

Mit dem erfindungsgemäßen Verfahren ergeben sich die oben im Zusammenhang mit der Anordnung genannten Vorteile, auf die insofern verwiesen wird. Besonders günstig ist, dass nach dem Anbringen der Haltemittel eine vormontierte Baueinheit vorliegt, die gegenüber der entspannten Länge der Schraubenfeder deutlich verkürzt und einfach handhabbar ist. Das Verkürzen bzw. Vorspannen der Schraubenfedern kann vor dem Transport zum Abnehmer erfolgen, so dass der benötigte Transportraum reduziert bzw. bei gleichem Transportraum der Transport einer größeren Anzahl von Schraubenfedern ermöglicht wird. Bei der Endmontage ist ein Spannen der Schraubenfeder, was üblicherweise mittels eines Spezialwerkzeuges erfolgt, nicht erforderlich, so dass der Montageaufwand deutlich reduziert ist.

Vorzugsweise erfolgt das Verkürzen der Schraubenfeder auf eine Einbaulänge, die zumindest 90 %, insbesondere zumindest 95% des Abstandes zwischen der ersten und zweiten Stützfläche in unbelastetem Zustand beträgt. Durch diese Ausgestaltung wird erreicht, dass die Anordnung aus Schraubenfeder und Haltemittel mit Spiel in der Einbausituation positioniert werden kann, wobei der Abstand zwischen den Federenden und dem jeweils zugehörigen Aufnahmelager gering gehalten ist.

Nach einer bevorzugten Ausgestaltung ist vorgesehen, dass das Lösen der Haltemittel nach einem axialen Belasten der Schraubenfeder durch Annähern der ersten und zweiten Stützfläche aneinander erfolgt. Bei Verwendung von Schraubenfedern als Achsfedern wird die Anordnung zunächst im Federbein bzw. der Achse montiert, anschließend wird die Feder durch Absenken des Fahrzeugs von der Hebebühne belastet, wobei die Achsfeder gegenüber der unbelasteten Einbaulänge axial verkürzt wird. Dann werden die Haltemittel entfernt, wobei dies prinzipiell auch vor dem Absenken des Fahrzeugs vorgenommen werden kann.

Der Verfahrensschritt des Positionierens der Schraubenfeder-Haltemittel-Anordnung in einer Einbaulage kann nach einer ersten Möglichkeit koaxial zu einem Stoßdämpfer erfolgen. Dabei bilden die Schraubenfeder und der Stoßdämpfer gemeinsam ein Federbein. Dies kann bei der Fahrzeugendmontage am Fahrzeug erfolgen, oder auch im Rahmen der Vormontage eines Federbeins, das dann als vormontierte Baueinheit am Fahrzeug verbaut wird. Nach einer weiteren Möglichkeit wird die Schraubenfeder-Haltemittel-Anordnung direkt in der Achse des Fahrzeugs positioniert und eingebaut, und zwar neben bzw. in paralleler Anordnung zum Stoßdämpfer. Die letztgenannte Bauweise findet sich vor allem in Hinterachsen von Kraftfahrzeugen, kommt aber - je nach Bauraumverhältnissen - auch in Vorderachsen vor.

Erfindungsgemäß weisen die Haltemittel zumindest ein Band auf, wobei das Anbringen an der Schraubenfeder durch Umschlingen zweier axial beabstandeter Windungen und Verbinden der freien Enden des Bandes erfolgt. Die Enden des Bandes können durch Schweißen oder Kleben miteinander verbunden werden. Das Band kann eine oder mehrere der obengenannten Ausgestaltungen aufweisen. Nach dem Verbinden der Bandenden zu einem endlosen Band, sind die Windungen, welche von dem Band umschlungen werden axial relativ zueinander fixiert. Vorzugsweise werden mehrere Umreifungsbänder über dem Umfang verwendet, um eine gleichmäßige Verkürzung in allen Umfangsbereichen zu erreichen. Das Lösen der endlosen Bänder erfolgt durch Aufschneiden.

Nach einer nicht erfindungsgemäßen Möglichkeit weisen die Haltemittel zumindest ein Hakenelement auf, das zwischen zwei Windungen der Schraubenfeder derart gespannt ist, dass die Windungen gegenüber einem entspannten Zustand aneinander axial angenähert sind. Dabei haben die Hakenelemente jeweils Biegeabschnitte, welche zwei zu einander beabstandete Windungen umgreifen und so axial gegeneinander fixieren. Das Lösen der Hakenelemente erfolgt durch einfaches Abnehmen, nachdem die Schraubenfeder durch Krafteinleitung über die Aufnahmelager axial verkürzt worden ist, beispielsweise durch Einfedern des Kraftfahrzeugs.

Bevorzugte Ausführungsbeispiele werden nachstehend anhand der Zeichnungsfiguren erläutert. Hierin zeigt
- Figur 1: eine erfindungsgemäße Anordnung mit Schraubenfeder und Haltemitteln in einer ersten Ausführungsform;
- Figur 2: die Anordnung aus Figur 1 auf einem Stoßdämpfer positioniert;
- Figur 3: die Anordnung aus Figur 2 mit aufgesetztem Federteller;
- Figur 4: das Haltemittel aus Figur 1 im Detail, ohne Schraubenfeder;
- Figur 5: eine Anordnung mit Schraubenfeder und Haltemittel in einer nichterfindungsgemäßen Ausführungsform;
- Figur 6: die Anordnung aus Figur 5 auf einem Stoßdämpfer positioniert;
- Figur 7: die Anordnung gemäß Figur 6 mit aufgesetztem Federteller;
- Figur 8: das Haltemittel aus Figur 5 im Detail, ohne Schraubenfeder;
- Figur 9: ein weiteres nicht-erfindungsgemäßes Haltemittel;
- Figur 10: ein erfindungsgemäßes Verfahren zur Montage einer Schraubenfeder schematisch
a) die Schraubenfeder in entspanntem Zustand,
b) die Schraubenfeder in vorgespanntem Zustand,
c) die Schraubenfeder mit Haltemitteln in axial verkürztem Zustand,
d) die Anordnung aus Schraubenfeder und Haltemitteln in unbelastetem Einbauzustand zwischen zwei Stützflächen,
e) die Schraubenfeder in belastetem Einbauzustand zwischen zwei Stützflächen beim Entfernen der Haltemittel.

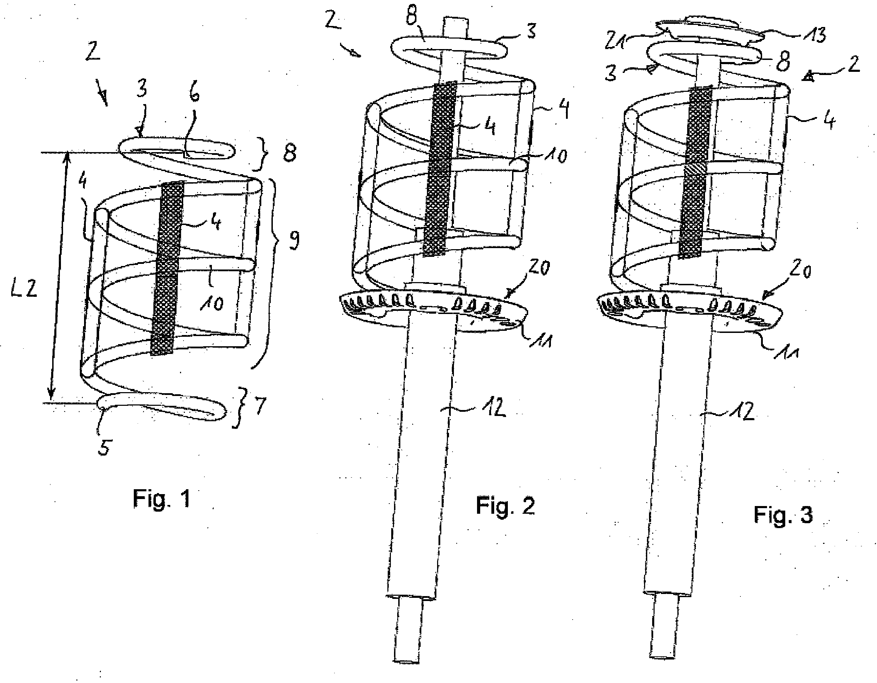

Die Figuren 1 bis 4 werden im Folgenden gemeinsam beschrieben. Es ist eine erfindungsgemäße Anordnung 2 mit einer Schraubenfeder 3 und Haltemitteln 4 gezeigt. Die Schraubenfeder weist ein erstes Ende 5 und ein entgegengesetzt gerichtetes zweites Ende 6 auf. Ausgehend vom unteren ersten Ende 5 hat die Schraubenfeder 3 einen ersten Abschnitt 7, mit dem sich die Schraubenfeder 3 gegenüber einem Aufnahmekörper abstützen kann. Entsprechend hat die Schraubenfeder 3 an ihrem oberen zweiten Ende 6 einen zweiten Abschnitt 8, der gegenüber einem zweiten Aufnahmekörper abgestützt werden kann. Die endseitigen Abschnitte 7, 8 haben jeweils ausgehend vom Ende einen sich vergrößernden Radius über der Länge der Feder. Zwischen den endseitigen Abschnitten 7, 8 hat die Schraubenfeder 3 einen dazwischen liegenden Abschnitt 9 welcher mehrere Federwindungen 10 umfasst.

Um die Schraubenfeder in einer gegenüber ihrer entspannten Ausgangslage axial verkürzten Position zu halten, sind über dem Umfang verteilt mehrere Haltemittel 4 vorgesehen, welche sich jeweils zwischen zwei Windungen 10 erstrecken. Die Haltemittel 4 sind jeweils in Form eines endlosen Bandes gestaltet, das vorzugsweise aus Kunststoff hergestellt ist, beispielsweise aus Polyester (PET) oder Polypropylen (PP). Durch die Bänder 4 ist die Schraubenfeder 3 gegenüber ihrer entspannten Ausgangslänge L1, auf eine axiale Länge L2 verkürzt, welche vorzugsweise zumindest 90%, insbesondere zumindest 95% der späteren Einbaulänge der Schraubenfeder 3 in unbelastetem Zustand entspricht. Dabei kann die Schraubenfeder 3 um 20% und mehr gegenüber ihrer entspannten Ausgangslänge L1 verkürzt sein.

Zur Vormontage der Anordnung aus Schraubenfeder 3 und Haltemitteln 4 wird die Schraubenfeder 3 in einer entsprechenden Vorrichtung axial vorgespannt. Dies kann mittels der Haltebänder 4 oder separater Spannmittel erfolgen. Ist die Schraubenfeder 3 auf die gewünschte axiale Länge L2 verkürzt, werden die Enden 22, 23 des Bandes 4 fest miteinander verbunden, was mittels Kleben oder Schweißen erfolgen kann. Um ein gleichmäßiges axiales Verkürzen in zumindest etwa koaxialer Ausrichtung zur Längsachse A der Feder 3 zu erreichen, werden mehrere Bänder über dem Umfang der Schraubenfeder 3 angebracht. Vorzugsweise werden drei Bänder 4 verwendet, die zumindest etwa regelmäßig über dem Umfang verteilt angeordnet werden. Hierdurch verteilen sich die Federkräfte entsprechend regelmäßig auf die Haltebänder 4.

Figur 2 zeigt die Anordnung 2 aus Figur 1 in auf einem ersten Aufnahmekörper 11 aufgesetzten Zustand. Der Aufnahmekörper 11 ist vorliegend in Form eines Federtellers gestaltet, der mit einem Stoßdämpfer 12 fest verbunden ist. Nach dem Aufsetzen der Anordnung 2 auf den (unteren) ersten Aufnahmekörper 11 kann der (obere) zweite Aufnahmekörper 13 bzw. Federteller auf den oberen Abschnitt 8 der Schraubenfeder 3 aufgesetzt werden. Dies ist in Figur 3 gezeigt. Der erste Aufnahmekörper 11 bildet eine erste Stützfläche 20, gegen welche sich die Feder 3 mit ihrem unteren Endabschnitt 7 im Einbauzustand abstützt. Entsprechend bildet der zweite Aufnahmekörper 13 eine zweite Stützfläche 21 für den oberen Endabschnitt 8 der Schraubenfeder 3.

Vorliegend ist die Verwendung einer Schraubenfeder-Haltemittel-Anordnung 2 als Teil eines Federbeins gezeigt. Dabei kann die Montage der Anordnung 2 an dem Stoßdämpfer 12 im Rahmen der Endmontage unmittelbar am Kraftfahrzeug erfolgen, oder die Schraubenfeder-Haltemittel-Anordnung 2 kann mit dem Stoßdämpfer 12 zu einer Baueinheit vormontiert werden, wobei die vormontierte Baueinheit dann in das Kraftfahrzeug eingebaut wird. Es versteht sich, dass neben der hier gezeigten Verwendung der Schraubenfeder-Haltemittel-Anordnung 2 als Teil eines Federbeins, diese auch unmittelbar in der Achse eines Kraftfahrzeugs eingebaut werden kann, das heißt neben bzw. in paralleler Anordnung zum Stoßdämpfer.

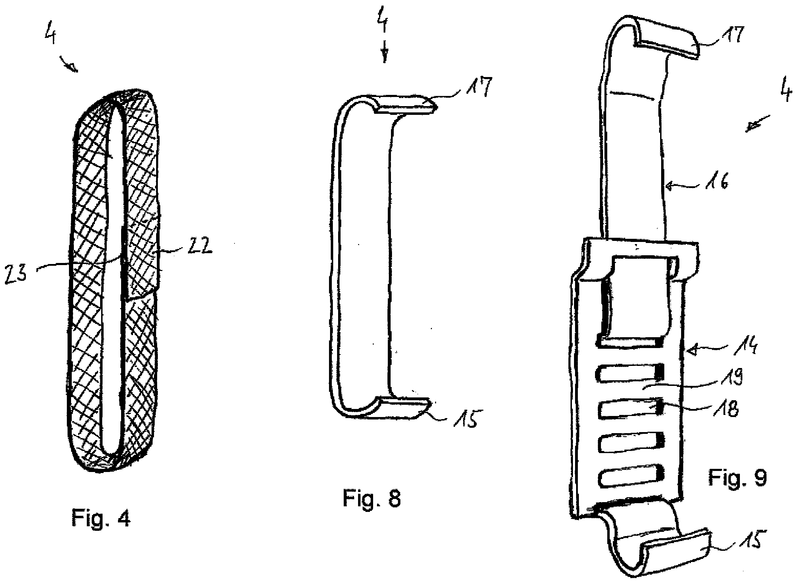

In Figur 4 ist eines der Haltebänder 4 als Einzelheit in perspektivischer Ansicht ohne Feder gezeigt. Die Enden 22, 23 des Bandes werden nach dem Umreifen der Federwindungen 10 stoffschlüssig miteinander verbunden, vorzugsweise durch Schweißen oder Kleben. Es ist erkennbar, dass die Bänder 4 eine strukturierte Oberfläche haben, um eine verbesserte Reibung gegenüber der Feder zu erreichen. Zusätzlich können weitere reibungsmindernde Mittel vorgesehen sein, beispielsweise Kleber, Silikon, Gummi oder Kreppband, das jeweils im Bereich der Kontaktflächen zwischen den Bändern 4 und der Schraubfeder 3 vorzusehen ist.

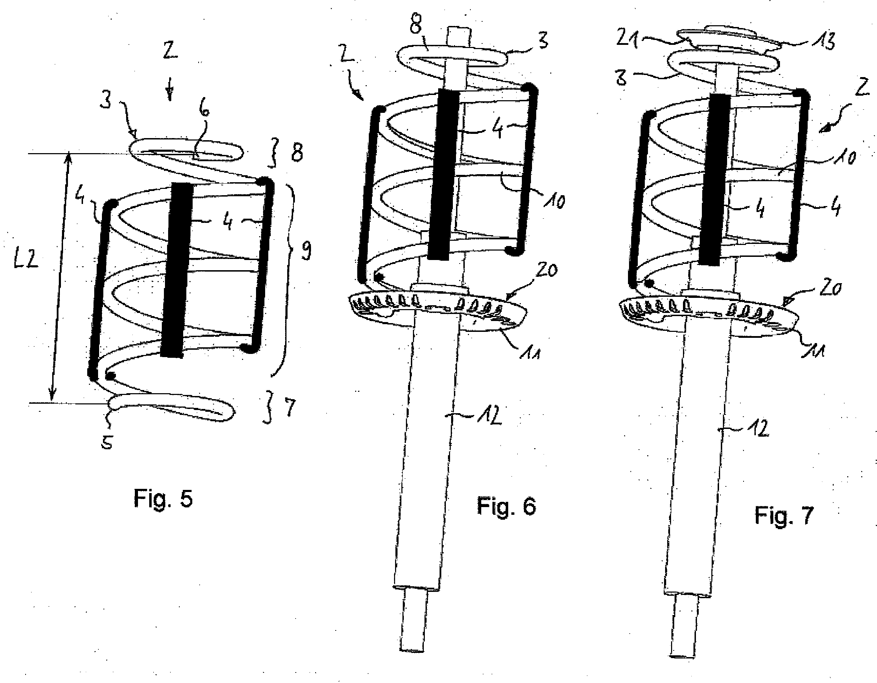

Die Figuren 5 bis 8, welche im Folgenden gemeinsam beschrieben werden, zeigen eine nicht-erfindungsgemäße Anordnung 2. Diese entspricht teilweise der Ausführungsform gemäß den Figuren 1 bis 4, auf deren Beschreibung insofern Bezug genommen wird. Dabei sind gleiche beziehungsweise einander entsprechende Bauteile mit gleichen Bezugszeichen versehen, wie in den Figuren 1 bis 4. Nachstehend wird in erster Linie auf die Unterschiede eingegangen.

Bei der vorliegenden Ausführungsform gemäß den Figuren 5 bis 8 sind die Haltemittel 4 in Form von starren Hakenelementen gestaltet. Die Hakenelemente sind vorzugsweise aus einem Stahlwerkstoff hergestellt und umfassen an ihren Enden jeweils umgebogene Halteabschnitte, mit denen die Hakenelemente 4 zwei axial voneinander beabstandete Windungen 10 umgreifen und in einer axial verkürzten Position zueinander fixieren. Auch bei der vorliegenden Ausführungsform sind mehrere Haltemittel 4 über den Umfang verteilt angeordnet, um ein gleichmäßiges axiales Verkürzen entlang der Längsachse A der Schraubenfeder 3 zu erreichen.

Figur 5 zeigt die Anordnung 2 aus Schraubfeder 3 und Haltemitteln 4 als Einzelheit, Figur 6 in auf den Federteller 11 eines Stoßdämpfers 12 aufgesetztem Zustand und Figur 7 mit auf das obere Ende 8 aufgesetzten zweitem Federteller 13. Bei der vorliegenden Ausführungsform können die Hakenelemente 4 durch axiales Belasten der Schraubenfeder 3 im Einbauzustand entfernt werden. Das axiale Belasten der Schraubenfeder 3 kann beispielsweise durch Absenken des Kraftfahrzeugs nach der Montage des Stoßdämpfers beziehungsweise der Achsfeder erfolgen.

In Figur 8 ist eine der Haken 4 im Detail in perspektivischer Ansicht gezeigt. Hier sind die gebogenen Endabschnitte 15, 17 erkennbar, welche zwei axial zueinander beabstandete Windungen 10 der Schraubenfeder 3 umgreifen können, um diese in einer gegenüber der entspannten Ausgangslänge verkürzten Länge L1 zu halten.

Figur 9 zeigt eine abgewandelte nicht-erfindungsgemäße Ausführungsform eines Haltemittels 4 für eine nicht-erfindungsgemäße Anordnung 2. Das Haltemittel 4 gemäß Figur 9 entspricht in weiten Teilen demjenigen gemäß den Figuren 5 bis 8. Im Unterschied zur obigen Ausführungsform ist das Hakenelement 4 gemäß Figur 9 zweiteilig aufgebaut und umfasst ein erstes Halteteil 14 mit einem ersten Halteabschnitt 15 sowie ein zweites Halteteil 16 mit einem zweiten Halteabschnitt 17. Die beiden Halteteile 14, 16 greifen ineinander, wobei sie vor dem Fixieren der Feder 3 in ihrer Länge stufenweise relativ zueinander einstellbar sind. Hierfür hat das erste Halteteil 14 eine Mehrzahl von Ausnehmungen 18, welche von Stegen 19 begrenzt werden. Das zweite Halteteil 16 kann mit einem endseitigen Haken in jede der Ausnehmungen 18 des ersten Halteteils 14 eingreifen, wobei der benachbarte Steg 19 umgriffen wird, so dass die beiden Halteteile 14, 16 relativ zueinander fixiert sind. Durch diese Ausgestaltung ergibt sich eine axiale Verstellbarkeit des Hakenelements 4, so dass sich Schraubenfedern 3 auf verschiedene axiale Längen eingestellt werden können.

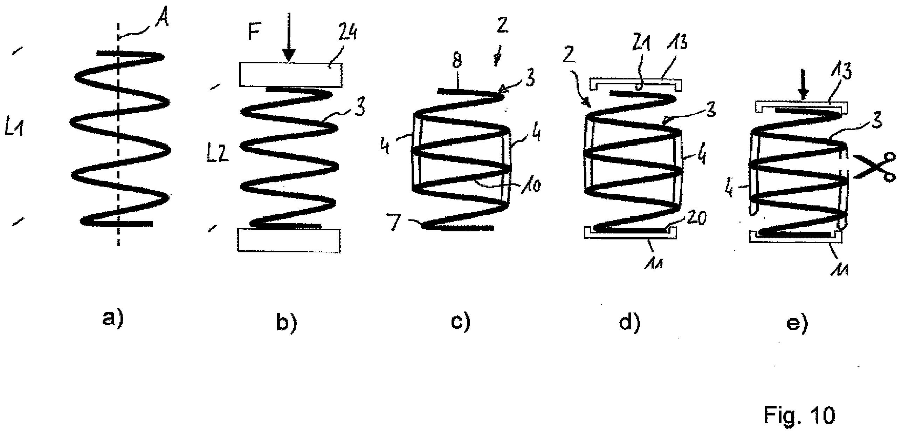

Die Figuren 10a bis 10e werden im Folgenden gemeinsam beschrieben. Es ist ein Verfahren zur Montage einer erfindungsgemäßen Anordnung 2 schematisch gezeigt. Figur 10a zeigt die Schraubenfeder 3 in entspanntem Zustand. Diese hat eine Länge L1. Die Schraubenfeder 3 wird in einer entsprechenden Vorrichtung 24, welche hier nur schematisch gezeigt ist, axial auf eine gewünschte Einbaulänge L2 verkürzt. Die Einleitung von Kraft in der Vorrichtung 24 ist schematisch durch einen Pfeil F dargestellt. Im nächsten Verfahrensschritt werden die Haltemittel 4 an der Schraubenfeder 3 fixiert, wobei insbesondere vorgesehen ist, dass die Haltemittel 4 mit Abstand zu den Windungsenden 5, 6 angeordnet sind. Vorliegend sind das axiale Verkürzen der Schraubenfeder 3 und das Fixieren mittels der Montagemittel 4 als separate Verfahrensschritte 10b und 10c dargestellt. Es ist jedoch ebenso denkbar, dass die beiden genannten Verfahrensschritte zusammengefasst werden; beispielsweise kann das axiale Verkürzen der Schraubenfeder 3 durch entsprechendes Spannen der um zwei axial beabstandete Windungen 10 umgelegten Bänder 4 erfolgen.

Im anschließenden Verfahrensschritt 10d wird die Anordnung 2 aus Schraubenfeder 3 und Haltemitteln 4 in die gewünschte Einbaulage eingesetzt. Anschließend werden die Haltemittel 4 von der Schraubenfeder 3 entfernt. Dabei kann der letzte Verfahrensschritt, das Entfernen der Haltemittel 4, entweder im unbelasteten oder im axial belasteten Einbauzustand der Schraubenfeder 3 erfolgen, wobei letzteres in Figur 10e gezeigt ist.

Für alle obengenannten Ausführungsbeispiele gilt, dass die Haltemittel 4 in an der Schraubenfeder 3 befestigten Zustand eine im Wesentlichen starre Länge haben. Hiermit ist gemeint, dass die Haltemittel 4 in montiertem Zustand nicht über ihre elastische Dehnung hinaus verlängerbar und auch nicht verstellbar sind. Der Vorteil der erfindungsgemäßen Anordnung 2 aus Schraubenfeder 3 und Haltemitteln 4 ist darin zu sehen, dass die so gebildete Baueinheit bereits in axial verkürzter Länge L2 an Abnehmer geliefert werden kann. Ein sonst nötiger Verfahrensschritt des Vorspannens der Schraubenfeder vor Ort, um diese auf Einbaulänge zu verkürzen, entfällt. Insgesamt ergibt sich somit eine einfache Montage, Transport, Handhabung und Demontage der Anordnung.

### Bezugszeichenliste

- 2: Anordnung
- 3: Schraubenfeder
- 4: Haltemittel
- 5: Ende
- 6: Ende
- 7: Endabschnitt
- 8: Endabschnitt
- 9: Zwischenabschnitt
- 10: Windung
- 11: erster Federteller
- 12: Stoßdämpfer
- 13: zweiter Federteller
- 14: erstes Halteteil
- 15: erster Halteabschnitt
- 16: zweites Halteteil
- 17: zweiter Halteabschnitt
- 18: Ausnehmung
- 19: Steg
- 20: erste Stützfläche
- 21: zweite Stützfläche
- 22: Ende
- 23: Ende
- 24: Vorrichtung

- A: Längsachse
- F: Kraft

## Patentansprüche

1. Anordnung (2) aus einer Schraubenfeder (3) und Haltemitteln (4),
wobei die Schraubenfeder (3) einen ersten Endabschnitt (7) zur Anlage an einer ersten Federaufnahme, einen zweiten Endabschnitt (8) zur Anlage an einer zweiten Federaufnahme sowie zwischen den beiden Endabschnitten (7, 8) mehrere Windungen (10) aufweist,
wobei die Haltemittel (4) so an der Schraubenfeder (3) angreifen, dass die Schraubenfeder (3) gegenüber einer entspannten Ausgangslänge axial verkürzt ist,
wobei die Haltemittel (4) in mit der Schraubenfeder (3) verbundenem Zustand eine unverstellbare Länge haben, und
wobei die Haltemittel (4) zumindest ein Band umfassen,
**dadurch gekennzeichnet, dass** das zumindest eine Band an zwei zwischen den beiden Endabschnitten (7, 8) liegenden und voneinander axial beabstandeten Windungen (10) angreift und diese umschlingt, wobei das zumindest eine Band durch Zerstören von der Schraubenfeder (3) lösbar ist.

2. Anordnung nach Anspruch 1,
**dadurch gekennzeichnet,**
**dass** die Schraubenfeder (3) durch die Haltemittel (4) auf eine axiale Länge verkürzt ist, die zumindest 90 %, insbesondere zumindest 95% einer Einbaulänge der Schraubenfeder (3) zwischen zwei Federaufnahmen (11, 13) in unbelastetem Zustand entspricht.

3. Anordnung nach einem der Ansprüche 1 oder 2,
**dadurch gekennzeichnet,**
**dass** die Schraubenfeder (3) mittels der Haltemittel (4) gegenüber einer entspannten Ausgangslage um zumindest 20%, insbesondere um zumindest 30 % verkürzt ist.

4. Anordnung nach einem der Ansprüche 1 bis 3,
**dadurch gekennzeichnet,**
**dass** das zumindest eine Band aus Kunststoff hergestellt ist, vorzugsweise aus Polyester (PET) oder Polypropylen (PP).

5. Anordnung nach einem der Ansprüche 1 bis 4,
**dadurch gekennzeichnet,**
**dass** die Haltemittel (4) zumindest im Kontaktbereich mit der Schraubenfeder (3) eine strukturierte Oberfläche aufweisen und / oder
**dass** rutschhemmende Mittel zwischen den Haltemitteln (4) und der Schraubenfeder (3) vorgesehen sind, wobei die rutschhemmenden Mittel zumindest eines aus der Gruppe von Kleber, Gummielement, Silikon und Band mit hohem Reibungskoeffizienten umfassen.

6. Verfahren zur Montage einer Schraubenfeder (3), die einen ersten Endabschnitt (7) zur Anlage an einer ersten Stützfläche (20), einen zweiten Endabschnitt (8) zur Anlage an einer zweiten Stützfläche (21) sowie zwischen den beiden Endabschnitten (7, 8) mehrere Windungen (10) aufweist, mit den Verfahrensschritten:
Verkürzen der Schraubenfeder (3) auf eine gegenüber ihrer Ausganglänge verkürzten Länge,
Anbringen von Haltemitteln (4) an der Schraubenfeder (3) derart, dass die Schraubenfeder (3) in ihrer axial verkürzten Länge gehalten wird, wobei die Haltemittel (4) in mit der Schraubenfeder (3) verbundenem Zustand eine unveränderbare Länge aufweisen, wobei die Haltemittel (4) zumindest ein Band aufweisen und das Anbringen an der Schraubenfeder (3) durch Umschlingen zweier axial beabstandeter Windungen (10), die zwischen dem ersten Endabschnitt (7) und dem zweiten Endabschnitt (8) liegen, und Verbinden der freien Enden (22, 23) des Bandes miteinander erfolgt,
Positionieren der Anordnung (2) aus Schraubenfeder (3) mit Haltemitteln (4) in einer Einbaulage zwischen der ersten Stützfläche (20) und der zweiten Stützfläche (21),
Lösen der Haltemittel (4) durch Zerstören des zumindest einen Bandes, wobei die erste und zweite Stützfläche (20, 21) nach dem Lösen der Haltemittel (4) über die Schraubenfeder (3) gegeneinander abgestützt sind.

7. Verfahren nach Anspruch 6,
**dadurch gekennzeichnet,**
**dass** das Lösen der Haltemittel (4) nach einem axialen Belasten der Schraubenfeder (3) durch Annähern der ersten und zweiten Stützfläche (20, 21) aneinander erfolgt, wobei die erste und zweite Stützfläche (20, 21) insbesondere so weit an einander angenähert werden, dass die Haltemittel (4) entlastet werden.

8. Verfahren nach einem der Ansprüche 6 oder 7,
**dadurch gekennzeichnet,**
**dass** das Verkürzen der Schraubenfeder (3) auf eine Einbaulänge erfolgt, die zumindest 90 %, insbesondere zumindest 95% des Abstandes zwischen der ersten und zweiten Stützfläche (20, 21) im unbelasteten Zustand beträgt.

## Claims

1. An arrangement (2) made of a coil spring (3) and holding means (4),
the coil spring (3) having a first end portion (7) for bearing against a first spring receptacle, a second end portion (8) for bearing against a second spring receptacle and a plurality of windings (10) between the two end portions (7, 8),
the holding means (4) acting on the coil spring (3) in such a manner that the coil spring (3) is axially shortened compared to a relaxed initial length,
the holding means (4) having a non-adjustable length in the condition connected to the coil spring (3), and the holding means (4) comprising at least one strap, **characterized in that** the at least one strap engages and wraps around two windings (10), which are located between the two end portions (7, 8) and are axially spaced from one another, wherein the at least one strap is detachable from the coil spring (3) by destruction.

2. The arrangement according to claim 1,
**characterized**
**in that** the coil spring (3) is shortened by the holding means (4) to an axial length, which corresponds to at least 90%, particularly at least 95% of an installation length of the coil spring (3) between two spring receptacles (11, 13) in the unloaded condition.

3. The arrangement according to one of claims 1 or 2,
**characterized**
**in that** the coil spring (3) is shortened by means of the holding means (4) by at least 20%, particularly by at least 30% compared to a relaxed initial length.

4. The arrangement according to one of claims 1 to 3,
**characterized**
**in that** the at least one strap is produced from plastic, preferably from polyester (PET) or polypropylene (PP).

5. The arrangement according to one of claims 1 to 4,
**characterized**
**in that** the holding means (4) have a structured surface at least in the contact region with the coil spring (3), and/or
**in that** non-slip means are provided between the holding means (4) and the coil spring (3), wherein the non-slip means comprise at least one from the group of adhesive, rubber element, silicone and strap with high coefficients of friction.

6. A method for mounting a coil spring (3), which has a first end portion (7) for bearing against a first supporting face (20), a second end portion (8) for bearing against a second supporting face (21) and has a plurality of windings (10) between the two end portions (7, 8), having the method steps:
shortening the coil spring (3) to a shortened length compared to its initial length,
attaching holding means (4) to the coil spring (3) in such a manner that the coil spring (3) is held in its axially shortened length, the holding means (4) having an unchangeable length in the state in which they are connected to the coil spring (3), the holding means (4) having at least one strap and the mounting to the coil spring (3) taking place by wrapping around two axially spaced windings (10), which lie between the first end portion (7) and the second end portion (8), and connecting the free ends (22, 23) of the strap to one another,
positioning the arrangement (2) made up of coil spring (3) with holding means (4) in an installation position between the first supporting face (20) and the second supporting face (21),
detaching the holding means (4) by destroying the at least one strap, the first and second supporting faces (20, 21) being supported with respect to one another by means of the coil spring (3) after the detachment of the holding means (4).

7. The method according to claim 6,
**characterized**
**in that** the detachment of the holding means (4) takes place, after axial loading of the coil spring (3) by bringing the first and second supporting faces (20, 21) closer to one another, wherein the first and second supporting faces (20, 21) are in particular brought so close to one another, that the holding means (4) are relaxed.

8. The method according to one of claims 6 or 7,
**characterized**
**in that** the shortening of the coil spring (3) to an installation length takes place, which is at least 90%, in particular at least 95% of the spacing between the first and second supporting faces (20, 21) in the unloaded condition.

## Revendications

1. Ensemble (2) constitué d'un ressort hélicoïdal (3) et de moyens de retenue (4),
dans lequel le ressort hélicoïdal (3) présente une première section d'extrémité (7) destinée à s'appliquer sur un premier logement de ressort, une deuxième section d'extrémité (8) destinée à s'appliquer sur un deuxième logement de ressort, ainsi que plusieurs spires (10) entre les deux sections d'extrémité (7, 8),
dans lequel les moyens de retenue (4) s'engagent de telle façon contre le ressort hélicoïdal (3), que le ressort hélicoïdal (3) est raccourci axialement par rapport à une longueur de départ détendue,
dans lequel les moyens de retenue (4) présentent une longueur non modifiable dans l'état relié au ressort hélicoïdal (3), et
dans lequel les moyens de retenue (4) comportent au moins une bande,
**caractérisé en ce que** l'au moins une bande s'engage contre deux spires (10) situées entre les deux sections d'extrémité (7, 8) et espacées axialement l'une de l'autre, tout en encerclant celles-ci, l'au moins une bande pouvant être détachée du ressort hélicoïdal (3) en étant détruite.

2. Ensemble selon la revendication 1,
**caractérisé en ce que**
le ressort hélicoïdal (3) est raccourci par les moyens de retenue (4) à une longueur axiale correspondant à au moins 90%, en particulier à au moins 95% d'une longueur d'installation du ressort hélicoïdal (3) entre deux logements de ressort (11, 13) dans l'état non sollicité.

3. Ensemble selon l'une des revendications 1 ou 2,
**caractérisé en ce que**
le ressort hélicoïdal (3) est raccourci d'au moins 20%, en particulier d'au moins 30% par les moyens de retenue (4) par rapport à une position de départ détendue.

4. Ensemble selon l'une des revendications 1 à 3,
**caractérisé en ce que**
au moins une bande en plastique est fabriquée, de préférence en polyester (PET) ou en polypropylène (PP).

5. Ensemble selon l'une des revendications 1 à 4,
**caractérisé en ce que**
les moyens de retenue (4) présentent une surface supérieure structurée au moins dans la région de contact avec le ressort hélicoïdal (3) et/ou
**en ce que** des moyens antidérapants sont prévus entre les moyens de retenue (4) et le ressort hélicoïdal (3), les moyens antidérapants comportant au moins un élément parmi le groupe comprenant une colle, un élément en caoutchouc, du silicone et une bande avec un coefficient de friction élevé.

6. Procédé pour le montage d'un ressort hélicoïdal (3) présentant une première section d'extrémité (7) destinée à s'appliquer sur une première surface d'appui (20), une deuxième section d'extrémité (8) destinée à s'appliquer sur une deuxième surface d'appui (21), ainsi que plusieurs spires (10) entre les deux sections d'extrémité (7, 8), comprenant les étapes de procédé suivantes :
raccourcissement du ressort hélicoïdal (3) à une longueur raccourcie par rapport à la longueur de départ, montage de moyens de retenue (4) sur le ressort hélicoïdal (3) de telle façon que le ressort hélicoïdal (3) est maintenu dans sa longueur raccourcie axialement, les moyens de retenue (4) présentant une longueur non modifiable dans l'état relié au ressort hélicoïdal (3), les moyens de retenue (4) présentant au moins une bande et le montage sur le ressort hélicoïdal (3) étant réalisé par encerclement de deux spires (10) axialement espacées, lesquelles se trouvent entre la première section d'extrémité (7) et la deuxième section d'extrémité (8), et en reliant les extrémités libres (22, 23) de la bande entre elles,
positionnement de l'ensemble (2) comprenant le ressort hélicoïdal (3) et les moyens de retenue (4) dans une position d'installation entre la première surface d'appui (20) et la deuxième surface d'appui (21),
détachement des moyens de retenue (4) par destruction de l'au moins une bande, les première et deuxième surfaces d'appui (20, 21) étant appuyées l'une contre l'autre par le biais du ressort hélicoïdal (3) après le détachement des moyens de retenue (4).

7. Procédé selon la revendication 6,
**caractérisé en ce que**
le détachement des moyens de retenue (4) est réalisé après une sollicitation axiale du ressort hélicoïdal (3) par rapprochement des première et deuxième surfaces d'appui (20, 21) l'une vers l'autre, les première et deuxième surfaces d'appui (20, 21) étant en particulier rapprochées au point d'alléger la contrainte des moyens de retenue (4).

8. Procédé selon l'une des revendications 6 ou 7,
**caractérisé en ce que**
le raccourcissement du ressort hélicoïdal (3) est réalisé à une longueur d'installation représentant au moins 90%, en particulier au moins 95% de l'espacement entre les première et deuxième surfaces d'appui (20, 21) dans l'état non sollicité.
